# EUROPEAN PATENT SPECIFICATION

(11) **EP 4 494 918 B1**
(45) Date of publication and mention of the grant of the patent: **17.06.2026**
(21) Application number: 23769792.5
(22) Date of filing: 14.03.2023
(51) Int. Cl.: B60L 53/16, H01R 13/631, H01R 13/629, H01R 13/58, B60L 3/00, B60L 53/18, H01R 11/01

(54) **CONNECTOR WITH A FLEXIBLE CONNECTING STRUCTURE**
VERBINDER MIT FLEXIBLE VERBINDUNGSSTRUKTUR
CONNECTEUR AVEC STRUCTURE DE CONNEXION FLEXIBLE

(30) Priority: 14.03.2022 CN 202210248399
(43) Date of publication of application: 22.01.2025
(73) Proprietor: Jilin Zhong Ying High Technology Co., Ltd., Jilin 130028 (CN)
(72) Inventor: WANG, Chao, Changchun, Jilin 130028 (CN)
(74) Representative: Habermann, Hruschka & Schnabel
(86) International application number: PCT/CN2023/081403
(87) International publication number: WO 2023/174290

(56) References cited:
- WO-A1-2014/007197
- WO-A1-2014/061726
- CN-A- 102 598 361
- CN-A- 107 819 223
- CN-A- 113 708 172
- CN-A- 114 709 667
- CN-U- 214 477 973
- CN-U- 215 732 301
- CN-U- 217 823 495
- US-A1- 2021 066 829
- US-B1- 9 472 893

## Description

### RELATED APPLICATION

The present disclosure claims priority of the Chinese invention patent application with the application number 202210248399.X, filed on March 14, 2022, and entitled "FLEXIBLE CONNECTION STRUCTURE OF CONNECTOR AND VEHICLE".

### TECHNICAL FIELD

The disclosure relates to the technical field of vehicle manufacturing, and more particularly to connector suitable for matching with a vehicle charging gun, the connector having a a flexible connection structure, and said vehicle.

### BACKGROUND

With the development of society and the improvement of economic level, people's awareness of environmental protection has gradually increased, and the demand for low-carbon life and low-carbon economy has become increasingly strong. Electric vehicles are used increasingly. The electric vehicle is charged by setting a connector to match with a charging gun. A connector in the charging system include a device fixed to the vehicle body, a cable and a terminal, and the connector is fixedly mounted on the vehicle, and a charging terminal is connected to the cable. In the normal design process of the connector, generally the terminal is rigidly connected to a transmission conductor, and phenomenon of terminal eccentric wear may occur during insertion and removal of the charging gun, thereby causing a plating layer of the terminal to be worn off, to expose main body of the terminal. This may increase the resistance, reduce the charging efficiency, but also easily cause temperature of the connection part of the terminal to rise, affecting the safety of high-voltage charging. Therefore, there is an urgent need for a new solution in the existing technology to solve the above problems. Conventional connectors are known from the prior art, for example from US9472893B1, WO2014007197A1, and WO2014061726A1.

### SUMMARY OF THE DISCLOSURE

The disclosure aims to solve the problem that a terminal and a transmission conductor are rigidly fixed, which can greatly reduce the risk of terminal eccentric wear and improve the safety of high-voltage charging. The present invention is set out in the appended set of claims. Any references to inventions or embodiments not falling within the scope of the independent claims are to be interpreted as examples useful for understanding the invention.

The disclosure provides a connector with a flexible connection structure, including
a connector body, a flexible conductor and a transmission conductor, in which the connector body is provided therein with a plug-in terminal, an end of the plug-in terminal is provided with a first connecting member, and an end of the transmission conductor is provided with a second connecting member;
one end of the flexible conductor is electrically connected to the first connecting member, and the other end of the flexible conductor is electrically connected to the second connecting member.

When the second connecting member vibrates, the flexible conductor deforms so as to buffer the vibration of the second connecting member.

The flexible conductor begins at an end connected to the second connecting member, and a portion that accounts for at least 2% of length of the flexible conductor is radially displaced along the length direction of the flexible conductor.

The flexible conductor begins at an end connected to the first connecting member, and a portion that accounts for at least 1% of length of the flexible conductor is not radially displaced along the length direction of the flexible conductor.

The plug-in terminal and the first connecting member form an integrated structure.

The plug-in terminal and the first connecting member are separate structures, and the plug-in terminal and the first connecting member are fixedly connected by welding or crimping.

The plug-in terminal and the first connecting member are separate structures, and the plug-in terminal and the first connecting member are detachably connected by clamping or screw connection or riveting.

The transmission conductor and the second connecting member form an integrated structure.

The transmission conductor and the second connecting member are fixedly connected by welding or crimping.

The transmission conductor and the second connecting member are detachably connected by clamping or screw connection or riveting.

The flexible conductor is a woven flat belt.

The flexible conductor has a twisted portion, and an angle between two adjacent planes connected by the twisted portion is 0° to 90°.

The flexible conductor is formed by winding or stranding multi-core wires.

The flexible conductor is a spiral conductor.

The flexible conductor has a different cross-sectional area from the first connecting member or the second connecting member.

The flexible conductor has a different cross-section shape from the first connecting member or the second connecting member.

The flexible conductor is connected to the first connecting member by welding or crimping.

The flexible conductor and the first connecting member are detachably connected by clamping or screw connection or riveting.

An end of the first connecting member is a first flat portion, the first flat portion has a first through hole, the flexible conductor has a second through hole, and the first through hole and the second through hole are connected through a bolt or rivet.

The number of the first flat portion is two, the two first flat portions are in parallel and both have a first through hole, and the second through hole is between the two first through holes.

The flexible conductor and the second connecting member are detachably connected by clamping or screw connection or riveting.

An end of the second connecting member is a second flat portion, the second flat portion has a third through hole, the flexible conductor has a fourth through hole, and the third through hole and the fourth through hole are connected through a bolt or rivet.

The number of the second flat portion is two, the two second flat portions are in parallel and both have a third through hole, and the fourth through hole is between the two third through holes.

The material of the plug-in terminal contains copper.

The material of the transmission conductor and/or the flexible conductor contains aluminum.

The connector body is a charging socket body.

The disclosure further provides a vehicle including a flexible connection structure of a connector described above, and the connector body is detachably arranged on the vehicle.

The disclosure has the following beneficial effects: the connector with a flexible connection transition solves the problem of rigid fixation between the terminal and the transmission conductor, so that when a charging gun is inserted into the connector body, the plug-in terminal can have a certain amount of shaking along the direction of the insertion force of the charging gun at the moment when the charging gun is inserted, so as to release the impact of the insertion force on the plug-in terminal. In particular, when the angle between the insertion direction of the charging gun and the plug-in terminal is too large, the impact force can be better reduced, which greatly reduces the risk of terminal eccentric wear, so as to improve the safety of high-voltage charging. The second connecting member is easy to detach, and only the second connecting member and the transmission conductor need to be separated when the connector body needs to be replaced.

Other features and advantages of the present disclosure will become clear from the following detailed description of exemplary embodiments of the present disclosure with reference to the accompanying drawings.

### BRIEF DESCRIPTION OF THE DRAWINGS

The accompanying drawings incorporated in and forming part of the specification show embodiments of the present disclosure and, together with description thereof, are used to explain the principle of the present disclosure.
FIG. 1 is a structural schematic of a flexible connection structure of a connector of the present disclosure;
FIG. 2 is a side view of a flexible connection structure of a connector of the present disclosure;
FIG. 3 is a structural schematic of an aluminum flat belt of a flexible connection structure of a connector, not falling within the scope of the claims;
FIG. 4 is a structural schematic of a spiral conductor of a flexible connection structure of a connector of the present disclosure.

Description of the reference numerals:
1. connector body; 2. plug-in terminal; 3. first connecting member; 4. flexible conductor; 41. woven aluminum flat belt; 42. spiral conductor; 5. transmission conductor; 6. second connecting member.

### DETAILED DESCRIPTION

Various exemplary embodiments of the disclosure will now be described in detail with reference to the accompanying drawings. It should be noted that, unless otherwise specified, the relative arrangements, numerical expressions, and numerical values of parts and steps set forth in these embodiments do not limit the scope of the present disclosure.

The following description of at least one exemplary embodiment is in fact illustrative only and in no way constitutes any limitation to the present disclosure, and its application or use.

Technologies, methods and apparatuses known to those ordinarily skilled in the art may not be discussed in detail, but where appropriate, said technologies, methods and apparatuses shall be considered as part of the specification.

In all the examples shown and discussed here, any specific value should be interpreted as merely exemplary and does not serve as limitation. Therefore, other examples of the exemplary embodiments may have different values.

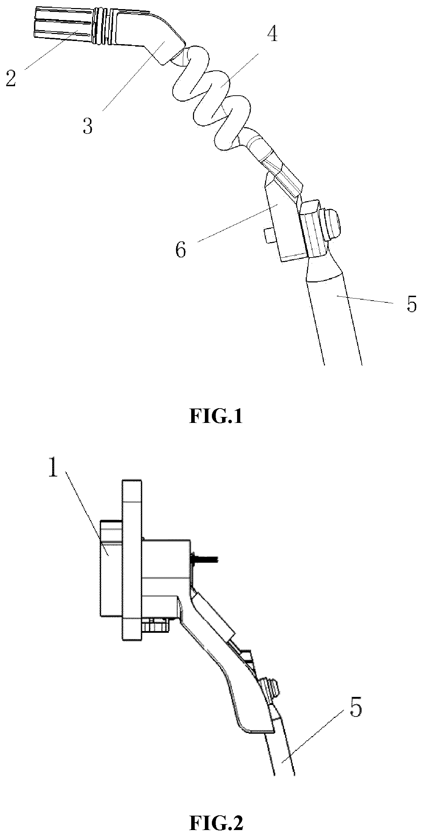

The disclosure discloses a flexible connection structure of a connector, as shown in FIGs. 1 to 4, including a connector body 1, a flexible conductor 4 and a transmission conductor 5, in which the connector body 1 is provided therein with a plug-in terminal 2, an end of the plug-in terminal 2 is provided with a first connecting member 3, and an end of the transmission conductor 5 is provided with a second connecting member 6; one end of the flexible conductor 4 is electrically connected to the first connecting member 3, and the other end of the flexible conductor is electrically connected to the second connecting member 6.

The existing connector structure is that a transmission conductor 5 is directly connected to a terminal in the connector body 1. The whole connection structure makes the connector and the terminal be rigidly fixed, and phenomenon of terminal eccentric wear may occur during insertion and removal of the charging gun. The phenomenon of eccentric wear refers to the phenomenon that the repeated friction at the plug-in part between the terminal and an opposite plug end that occurs due to being stressed unevenly in all directions causes the plating layer to be damaged and to expose the terminal body. After the terminal body is exposed, the resistance increases, the current weakens, and heat generation amount increases, which affects the safety and charging efficiency of high-voltage charging for a long time. The flexible conductor 4 of the disclosure can not only conduct electricity but also has its own flexibility, so that the plug-in terminal 2 in the connector body 1 can have a certain activity space. When the charging gun is inserted into the connector body 1, due to the presence of the flexible conductor 4, the connector terminal 2 may move slightly in the direction of the force at which the charging gun is inserted, so as to avoid the increase in friction strength caused by excessive stress on a certain surface caused by rigid contact. In addition, due to soft characteristics of the flexible conductor 4, it is not suitable for connection methods that facilitate detachment such as screw connection, and can only adopt fixed connection methods such as welding, so that it is not easy to separate the flexible conductor 4 from the transmission conductor 5 for easy replacement. In this case, a second connecting member 6 is provided to connect the flexible conductor 4 and the transmission conductor 5, so as to facilitate detachment, that is, it is only necessary to separate the second connecting member 6 from the transmission conductor 5, when the connector body 1 needs to be replaced.

Further, when the second connecting member 6 vibrates, the flexible conductor 4 deforms so as to buffer the vibration of the second connecting member 6. During driving of the vehicle, the transmission conductor 5 may swing with the vehicle body, and long-time swing may drive the second connecting member 6 to vibrate, and when the second connecting member 6 vibrates, it may drive the plug-in terminal 2 to shake in rigid connection, and long-term shake may damage the connection structure of the plug-in terminal 2 and the connector body 1. Therefore, the flexible conductor 4 is disposed to prevent the vibration of the second connecting member 6 from being transferred to the plug-in connector 2 through its own deformation, thereby protecting the plug-in terminal 2.

In some embodiments, the flexible conductor 4 is radially displaced along the length direction of the flexible conductor 4 at least 2% of the length of the flexible conductor 4 from one end connected to the second connecting member 6, and along the length direction of the flexible conductor 4, the flexible conductor 4 is displaced in a portion of at least 2% of the length of the flexible conductor 4 is displaced in the direction of the length of the flexible conductor 4. If the radial displacement length of the flexible conductor 4 is too small, the buffer produced to the vibration is not enough to fully buffer the vibration of the second connecting member 6. In order to find an appropriate ratio of the length at which the flexible conductor 4 is radially displaced to the length of the flexible conductor 4, the inventor conducted relevant tests. The test method is to select the same second connecting member 6 and a different flexible conductor 4 to form a sample. The flexible conductor 4 has different lengths at which it can be radially displaced. The sample is subjected to vibration test for one hour. If the rate of increase in impedance being greater than 2% is regarded as being not qualified, it indicates that fretting corrosion still exists, and it is unqualified, and the results are shown in Table 1.

**Table 1: Influence of the ratio of the length at which the flexible conductor 4 is radially displaced to the length of the flexible conductor on the impedance**

| The ratio of the length at which the flexible conductor 4 is radially displaced to the length of the flexible conductor (%) | | | | | | | | | |
|---|---|---|---|---|---|---|---|---|---|
| 1.8 | 1.9 | 2 | 2.1 | 2.2 | 2.4 | 2.6 | 3 | 3.2 | 3.5 |

| Impedance rise rate (%) | | | | | | | | | |
|---|---|---|---|---|---|---|---|---|---|
| 2.5 | 2.2 | 2 | 1.9 | 1.8 | 1.7 | 1.7 | 1.5 | 1.5 | 1.4 |

As shown in Table 1, when the ratio of the length at which the flexible conductor 4 is radially displaced to the length of the flexible conductor is less than 2%, the impedance between the flexible conductor 4 and the second connecting member 6 after vibration test rises by more than 2%. Therefore, it is exemplary that the flexible conductor 4 begins at an end connected to the second connecting member 6, and a portion that accounts for at least 2% of length of the flexible conductor 4 is radially displaced along the length direction of the flexible conductor 4.

Therefore, through testing, the inventor finds that if the vibrating part of the flexible conductor 4 is less than 2% of the total length of the flexible conductor 4, it cannot effectively buffer the vibration of the second connecting member 6, and the force generated by the vibration is concentratedly released at the connection part of the flexible conductor 4 and the second connecting member 6, and if this is done for a long time, the flexible conductor 4 and the second connecting member 6 may be separated very easily, resulting in disconnection. Therefore, it is exemplary that a portion that accounts for at least 2% of length of the flexible conductor 4 is radially displaced.

In some embodiments, the flexible conductor 4 begins at an end connected to the first connecting member 3, and a portion that accounts for at least 1% of length of the flexible conductor 4 is not radially displaced along the length direction of the flexible conductor 4.

If the portion of the flexible conductor 4 that is not radially displaced is too small, the vibration of the second connecting member 6 may still be transferred to the first connecting member 3. In order to find an appropriate ratio of the length at which the flexible conductor 4 is not radially displaced to the length of the flexible conductor 4, the inventor conducted relevant tests. The test method is to select the same first connecting member 3 and a different flexible conductor 4 to form a sample. The flexible conductor 4 has different lengths at which it can be radially displaced. The sample is subjected to vibration test for one hour. If the rate of increase in impedance being greater than 2% is regarded as being not qualified, it indicates that fretting corrosion still exists, and it is unqualified, and the results are shown in Table 2.

**Table 2: Influence of the ratio of the length at which the flexible conductor 4 is not radially displaced to the length of the flexible conductor on the impedance**

| The ratio of the length at which the flexible conductor 4 is radially displaced to the length of the flexible conductor (%) | | | | | | | | | |
|---|---|---|---|---|---|---|---|---|---|
| 0.8 | 0.9 | 1 | 1.1 | 1.2 | 1.4 | 1.6 | 1.8 | 2 | 2.2 |

| Impedance rise rate (%) | | | | | | | | | |
|---|---|---|---|---|---|---|---|---|---|
| 2.5 | 2.2 | 2 | 1.9 | 1.8 | 1.8 | 1.6 | 1.5 | 1.5 | 1.4 |

As shown in Table 2, when the ratio of the length at which the flexible conductor 4 is not radially displaced to the length of the flexible conductor is less than 1%, the impedance between the flexible conductor 4 and the first connecting member 3 after the vibration test rises by more than 2%, it is regarded as being not qualified. Therefore, it is exemplary that the flexible conductor 4 begins at an end connected to the first connecting member 3, and a portion that accounts for at least 1% of length of the flexible conductor 4 is not radially displaced along the length direction of the flexible conductor 4.

In some embodiments, the plug-in terminal 2 and the first connecting member 3 form an integrated structure. The integrated structure reduces the number of parts, facilitates processing, and can reduce processes and costs.

In some embodiments, the plug-in terminal 2 and the first connecting member 3 are separate structures, and the plug-in terminal 2 and the first connecting member 3 are fixedly connected by welding or crimping. The material of the plug-in terminal 2 is generally copper or copper alloy, and the flexible conductor 4 may be aluminum. Copper or copper alloy have high electrical conductivity and can be widely used in the field of electrical transmission. The flexible conductor 4 is connected to the plug-in terminal 2 by welding. The welding methods adopted include one or several of resistance welding, friction welding, ultrasonic welding, arc welding, laser welding, electron beam welding, pressure diffusion welding and magnetic induction welding. The concentrated heat energy or pressure is used to create a fused connection at a position of contact between the plug-in terminal 2 and the flexible conductor 4, to produce stable connection by the welding. Such welding can achieve connection of dissimilar materials, and has better conductive effect due to contact position fusion.

The resistance welding refers to a method of welding by strong current passing through the contact point between the electrode and the workpiece to generate heat from the contact resistance.

The friction welding refers to a method of welding by using the heat generated by the friction of the workpiece contact surface as the heat source to make the workpiece produce plastic deformation under the action of pressure.

The ultrasonic welding refers to that high-frequency vibration wave is transmitted to the surfaces of two objects to be welded, and under pressurization, the surfaces of two objects rub against each other to form a fusion between molecular layers.

The arc welding refers to that electric arc is taken as the heat source and the physical phenomenon of atmospherical discharges is utilized to convert electrical energy into thermal and mechanical energy required for welding, so as to achieve the purpose of connecting metal, and the main methods include welding electrode arc welding, submerged arc welding, gas shielded welding and so on.

The laser welding method refers to an efficient and precise welding method using a laser beam with high energy density as a heat source.

The friction welding method refers to a method of welding by using the heat generated by the friction of the workpiece contact surface as the heat source to make the workpiece produce plastic deformation under the action of pressure.

The electron beam welding method refers to the use of accelerated and focused electron beam to bombard the welding surface placed in vacuum or non-vacuum, so that the welded workpiece is melted to achieve welding.

The pressure welding method is a method of applying pressure to a weldment to make the binding surface be in contact closely to produce a certain plastic deformation and complete the welding.

The magnetic induction welding refers to that instantaneous high-speed collision occurs between two workpieces to be welded under the action of strong pulsed magnetic field, and when surface of the material is subjected to high pressure waves, the atoms of the two materials meet in the interatomic distance, thus forming a stable metallurgical bond at the interface, which is a type of solid-state cold welding that can weld together conductive metals with similar or dissimilar properties.

The crimping refers to the production process that after the plug-in terminal 2 and the first connecting member 3 are assembled, the two are stamped into one using a crimping machine. The advantage of crimping is mass production, and a large amount of products with stable quality can be produced quickly by using an automatic crimping machine.

In some embodiments, the plug-in terminal 2 and the first connecting member 3 are separate structures, and the plug-in terminal 2 and the first connecting member 3 are detachably connected by clamping or screw connection or riveting. The clamping refers to that corresponding clamping claw or clamping slot are arranged on the plug-in terminal 2 and the first connecting member 3 respectively, which are connected together by being assembled through the clamping slot or clamping claw. The clamping method has advantages of fast connection and detachability.

The screw connection refers to that the plug-in terminal 2 and the first connecting member 3 respectively have a threaded structure and can be screwed together with each other, or connected together using separate studs and nuts. The advantage of the threaded connection is detachability, and assembling and disassembling can be performed repeatedly, which is suitable for scenarios that require frequent disassembly.

Riveting refers to that the plug-in terminal 2 and the first connecting member 3 are riveted together by using rivets. The riveting has advantages of firm connection, simple processing method and easy operation.

In some embodiments, the transmission conductor 5 and the second connecting member 6 form an integrated structure. The integrated structure can reduce the number of parts, facilitates construction, and can reduce processes and costs.

In some embodiments, the transmission conductor 5 and the second connecting member 6 are fixedly connected by welding or crimping.

In some embodiments, the flexible conductor 4 is connected to the first connecting member 3 by welding or crimping.

The welding methods adopted include one or several of resistance welding, friction welding, ultrasonic welding, arc welding, laser welding, electron beam welding, pressure diffusion welding and magnetic induction welding. Such welding can obtain stable connection, can achieve connection of dissimilar materials, and has better conductive effect due to contact position fusion. The specific welding method is as described above. The advantage of crimping is mass production, and a large amount of products with stable quality can be produced quickly by using an automatic crimping machine.

In some embodiments, the transmission conductor 5 and the second connecting member 6 are detachably connected by clamping or screw connection or riveting. The clamping refers to that corresponding clamping claw or clamping slot are arranged on the transmission conductor 5 and the second connecting member 6 respectively, which are connected together by being assembled through the clamping slot or clamping claw. The clamping method has advantages of fast connection and detachability.

The screw connection refers to that the transmission conductor 5 and the second connecting member 6 respectively have a threaded structure and can be screwed together with each other, or connected together using separate studs and nuts. The advantage of the threaded connection is detachability, and assembling and disassembling can be performed repeatedly, which is suitable for scenarios that require frequent disassembly.

Riveting refers to that the transmission conductor 5 and the second connecting member 6 are riveted together by using rivets. The riveting has advantages of firm connection, simple processing method and easy operation.

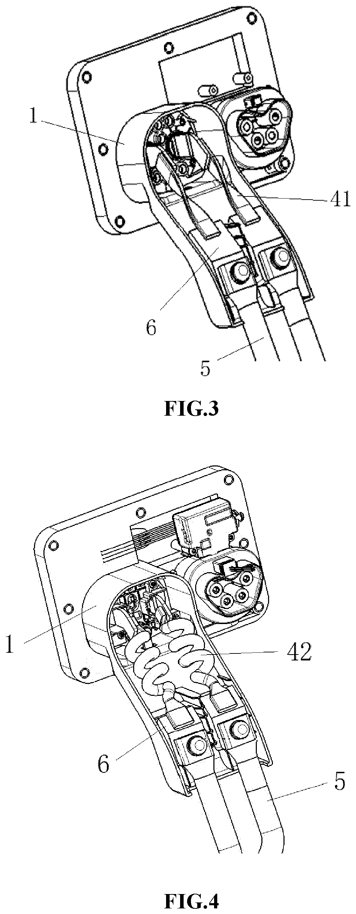

In some embodiments, the flexible conductor 4 is a woven aluminum flat belt 41. As shown in FIG. 3, the woven aluminum flat belt 41 is flexible, easy to bend and has excellent electrical conductivity.

In some embodiments, the flexible conductor 4 is a flexible flat belt formed by stacking multiple layers of thin plates. The thin plates are made of soft material and easy to deform, suitable for being used as the flexible conductor 4, and stacking of multiple layers of thin plates can not only ensure flexibility, but also ensure the efficiency of electrification.

Further, the flexible conductor 4 has a twisted portion, and an angle between two adjacent planes connected by the twisted portion is 0° to 90°. An outlet angle of the transmission conductor 5 may differ in different connector bodies 1, and the flexible conductor 4 can be set to have a twisted portion, that is, two ends of the flexible conductor 4 form a certain angle by twisting of the twisted portion, the angle can be any value according to the need, so as to meet different assembly environments.

In some embodiments, the flexible conductor 4 is formed by winding or stranding multi-core wires. The multi-core wire is flexible, easy to bend and has excellent electrical conductivity. The two ends of the flexible conductor 4 made of the multi-core wire can be provided with planes for welding in different directions according to the needs. Because the flexible conductor 4 conducts a high current, large electromagnetic interference is generated in the surrounding area. In order to avoid the impact of electromagnetic interference on the electric devices of the vehicle, the flexible conductor 4 can be made by winding or stranding unshielded multi-core wires one another to reduce the electromagnetic interference generated by the flexible conductor 4. The electromagnetic interference generated by the mutually stranded flexible conductors 4 may be offset by each other, so as to no longer affect the electrical devices of the vehicle, reduce the use of shielding layers, reduce processing and material costs, and reduce the cost of the vehicle.

According to the invention, the flexible conductor 4 is a spiral conductor 42. As shown in FIG. 4, the spiral conductor 42 is spring-like and has elasticity of a spring, which can release the vibration force well.

In some embodiments, the flexible conductor 4 has a different cross-sectional area from the first connecting member 3 or the second connecting member 6. During transmission of current, the cross-sectional area only needs to meet the current transmission needs, so that the cross-sectional area can be reduced while sufficient current strength can still be ensured, thereby saving costs.

In some other embodiments, the flexible conductor 4 has a different cross-section shape from the first connecting member 3 or the second connecting member 6. In this way, the flexible conductor 4 can be arranged in different connectors according to the needs, so as to meet different assembly environments, and conveniently extend into the connectors with different apertures.

In some embodiments, the flexible conductor 4 and the first connecting member 3 are detachably connected by clamping or screw connection or riveting. The clamping refers to that corresponding clamping claw or clamping slot are arranged on the flexible conductor 4 and the first connecting member 3 respectively, which are connected together by being assembled through the clamping slot or clamping claw. The clamping method has advantages of fast connection and detachability.

The screw connection refers to that the flexible conductor 4 and the first connecting member 3 respectively have a threaded structure and can be screwed together with each other, or connected together using separate studs and nuts. The advantage of the threaded connection is detachability, and assembling and disassembling can be performed repeatedly, which is suitable for scenarios that require frequent disassembly.

Riveting refers to that the flexible conductor 4 and the first connecting member 3 are riveted together by using rivets. The riveting has advantages of firm connection, simple processing method and easy operation.

In some embodiments, an end of the first connecting member 3 is a first flat portion, the first flat portion has a first through hole, the flexible conductor 4 has a second through hole, and the first through hole and the second through hole are connected through a bolt or rivet. The first flat portion and the flexible conductor 4 are more suitable for screw connection or riveting, and are firmer than cylindrical direct screw connection.

Further, the number of the first flat portion is two, the two first flat portions are in parallel and both have a first through hole, and the second through hole is between the two first through holes. That is to say, two first flat portions clamp the flexible conductor 4 in the middle, and the second through hole is arranged between the two first through holes and then fixed with bolts to make the connection firmer.

In some embodiments, the flexible conductor 4 and the second connecting member 6 are detachably connected by clamping or screw connection or riveting. The clamping refers to that corresponding clamping claw or clamping slot are arranged on the flexible conductor 4 and the second connecting member 6 respectively, which are connected together by being assembled through the clamping slot or clamping claw. The clamping method has advantages of fast connection and detachability.

The screw connection refers to that the flexible conductor 4 and the second connecting member 6 respectively have a threaded structure and can be screwed together with each other, or connected together using separate studs and nuts. The advantage of the threaded connection is detachability, and assembling and disassembling can be performed repeatedly, which is suitable for scenarios that require frequent disassembly.

Riveting refers to that the flexible conductor 4 and the second connecting member 6 are riveted together by using rivets. The riveting has advantages of firm connection, simple processing method and easy operation.

In some embodiments, an end of the second connecting member is a second flat portion, the second flat portion has a third through hole, the flexible conductor has a fourth through hole, and the third through hole and the fourth through hole are connected through a bolt or rivet.

Further, the number of the second flat portion is two, the two second flat portions are in parallel and both have a third through hole, and the fourth through hole is between the two third through holes. That is to say, two first flat portions clamp the flexible conductor 4 in the middle, and the second through hole is arranged between the two first through holes and then fixed with bolts to make the connection firmer.

In some embodiments, the material of the plug-in terminal 2 contains copper. The plug-in connector 2 containing copper material has high electrical conductivity and can effectively improve the charging efficiency as part of the charging system.

In some embodiments, the material of the transmission conductor 5 and/or the flexible conductor 4 contains aluminum. The electrical conductivity of aluminum is second only to copper, and aluminum resource storage is large and cheap, and becomes one of the main materials to replace copper cables. Moreover, the weight of aluminum is light, and the transmission conductor 5 and the flexible conductor 4 made of material containing aluminum can effectively reduce the weight of the vehicle body.

In some embodiments, the connector body 1 is a charging socket body. The plug-in terminal 2 is arranged in the charging socket body. The first connecting member 3, the flexible conductor 4, the second connecting member 6 and the transmission conductor 5 are connected successively on the plug-in terminal 2. The transmission conductor 5 is connected with the vehicle-mounted battery to form the charging system of the electric vehicle.

The disclosure further discloses a vehicle including a flexible connection structure of a connector described above, and the connector body 1 is detachably arranged on the vehicle.

## Claims

1. A connector suitable for matching with a vehicle charging gun, the connector having a flexible connection structure and comprising a connector body (1), a flexible conductor (4) and a transmission conductor (5), the connector body (1) is provided therein with a plug-in terminal (2), an end of the plug-in terminal (2) is provided with a first connecting member (3), and an end of the transmission conductor (5) is provided with a second connecting member (6);
one end of the flexible conductor (4) is electrically connected to the first connecting member (3), and the other end of the flexible conductor (4) is electrically connected to the second connecting member (6);
**characterized in that**
the flexible conductor (4) is an elastic spring-like spiral conductor (42), which defines a longitudinal hollow region on its inner side.

2. The connector according to claim 1, wherein, when the second connecting member (6) vibrates, the flexible conductor (4) deforms so as to buffer the vibration of the second connecting member (6).

3. The connector according to claim 2, wherein the flexible conductor (4) begins at an end connected to the second connecting member (6), and a portion that accounts for at least 2% of length of the flexible conductor (4) is radially displaced along the length direction of the flexible conductor (4).

4. The connector according to claim 2, wherein the flexible conductor (4) begins at an end connected to the first connecting member (3), and a portion that accounts for at least 1% of length of the flexible conductor (4) is not radially displaced along the length direction of the flexible conductor (4).

5. The connector according to claim 1, wherein the plug-in terminal (2) and the first connecting member (3) form an integrated structure; or
the plug-in terminal (2) and the first connecting member (3) are separate structures, and the plug-in terminal (2) and the first connecting member (3) are fixedly connected by welding or crimping; or
the plug-in terminal (2) and the first connecting member (3) are separate structures, and the plug-in terminal (2) and the first connecting member (3) are detachably connected by clamping or screw connection or riveting; or
the transmission conductor (5) and the second connecting member (6) form an integrated structure; or
the transmission conductor (5) and the second connecting member (6) are fixedly connected by welding or crimping; or
the transmission conductor (5) and the second connecting member (6) are detachably connected by clamping or screw connection or riveting; or
the flexible conductor (4) is formed by winding or stranding multi-core wires; or
the flexible conductor (4) has a different cross-sectional area from the first connecting member (3) or the second connecting member (6); or
the flexible conductor (4) has a different cross-section shape from the first connecting member (3) or the second connecting member (6); or
the flexible conductor (4) is connected to the first connecting member (3) by welding or crimping.

6. The connector according to claim 5, wherein the flexible conductor (4) has a twisted portion, and an angle between two adjacent planes connected by the twisted portion is 0° to 90°.

7. The connector according to claim 1, wherein the flexible conductor (4) and the first connecting member (3) are detachably connected by clamping or screw connection or riveting;
preferably wherein an end of the first connecting member (3) is a first flat portion, the first flat portion has a first through hole, the flexible conductor (4) has a second through hole, and the first through hole and the second through hole are connected through a bolt or rivet;
more preferably wherein the number of the first flat portion is two, the two first flat portions are in parallel and both have a first through hole, and the second through hole is between the two first through holes.

8. The connector according to claim 1, wherein the flexible conductor (4) and the second connecting member (6) are detachably connected by clamping or screw connection or riveting;
preferably wherein an end of the second connecting member (6) is a second flat portion, the second flat portion has a third through hole, the flexible conductor (4) has a fourth through hole, and the third through hole and the fourth through hole are connected through a bolt or rivet;
more preferably wherein the number of the second flat portion is two, the two second flat portions are in parallel and both have a third through hole, and the fourth through hole is between the two third through holes.

9. The connector according to claim 1, wherein the material of the plug-in terminal (2) contains copper.

10. The connector according to claim 1, wherein the material of the transmission conductor (5) and/or the flexible conductor (4) contains aluminum.

11. The connector according to claim 1, wherein the connector body (1) is a charging socket body.

## Patentansprüche

1. Verbinder, der zur Anpassung an eine Fahrzeug-Ladepistole geeignet ist, wobei der Verbinder eine flexible Verbindungsstruktur aufweist und einen Verbinderkörper (1), einen flexiblen Leiter (4) und einen Übertragungsleiter (5) umfasst, wobei der Verbinderkörper (1) darin mit einer Steckklemme (2) vorgesehen ist, ein Ende der Steckklemme (2) mit einem ersten Verbindungselement (3) versehen ist, und ein Ende des Übertragungsleiters (5) mit einem zweiten Verbindungselement (6) versehen ist;
ein Ende des flexiblen Leiters (4) elektrisch mit dem ersten Verbindungselement (3) verbunden ist und das andere Ende des flexiblen Leiters (4) elektrisch mit dem zweiten Verbindungselement (6) verbunden ist;
**dadurch gekennzeichnet, dass**
der flexible Leiter (4) ein elastischer, federartiger Spiralleiter (42) ist, der an seiner Innenseite einen Längshohlraum definiert.

2. Verbinder nach Anspruch 1, bei dem, wenn das zweite Verbindungselement (6) schwingt, sich der flexible Leiter (4) verformt, um die Schwingung des zweiten Verbindungselements (6) zu dämpfen,

3. Verbinder nach Anspruch 2, bei dem der flexible Leiter (4) an einem mit dem zweiten Verbindungselement (6) verbundenen Ende beginnt und ein Abschnitt, der mindestens 2 % der Länge des flexiblen Leiters (4) ausmacht, entlang der Längsrichtung des flexiblen Leiters (4) radial versetzt ist.

4. Verbinder nach Anspruch 2, bei dem der flexible Leiter (4) an einem mit dem ersten Verbindungselement (3) verbundenen Ende beginnt und ein Abschnitt, der mindestens 1 % der Länge des flexiblen Leiters (4) ausmacht, entlang der Längsrichtung des flexiblen Leiters (4) nicht radial versetzt ist.

5. Verbinder nach Anspruch 1, bei dem die Steckklemme (2) und das erste Verbindungselement (3) eine integrierte Struktur bilden; oder
die Steckklemme (2) und das erste Verbindungselement (3) getrennte Strukturen sind und die Steckklemme (2) und das erste Verbindungselement (3) durch Schweißen oder Crimpen fest miteinander verbunden sind; oder
die Steckklemme (2) und das erste Verbindungselement (3) getrennte Strukturen sind und die Steckklemme (2) und das erste Verbindungselement (3) durch Klemmen, Verschrauben oder Nieten lösbar verbunden sind; oder
der Übertragungsleiter (5) und das zweite Verbindungselement (6) eine integrierte Struktur bilden; oder
der Übertragungsleiter (5) und das zweite Verbindungselement (6) durch Schweißen oder Crimpen fest miteinander verbunden sind; oder
der Übertragungsleiter (5) und das zweite Verbindungselement (6) durch Klemmen, Verschrauben oder Nieten lösbar verbunden sind; oder
der flexible Leiter (4) durch Wickeln oder Verseilen von mehradrigen Drähten gebildet ist; oder
der flexible Leiter (4) eine andere Querschnittsfläche aufweist als das erste Verbindungselement (3) oder das zweite Verbindungselement (6); oder
der flexible Leiter (4) eine andere Querschnittsform als das erste Verbindungselement (3) oder das zweite Verbindungselement (6) aufweist; oder
der flexible Leiter (4) durch Schweißen oder Crimpen mit dem ersten Verbindungselement (3) verbunden ist.

6. Verbinder nach Anspruch 5, bei dem der flexible Leiter (4) einen verdrillten Abschnitt aufweist und ein Winkel zwischen zwei benachbarten Ebenen, die durch den verdrillten Abschnitt verbunden sind, 0° bis 90° beträgt.

7. Verbinder nach Anspruch 1, bei dem der flexible Leiter (4) und das erste Verbindungselement (3) durch Klemmen, Verschrauben oder Nieten lösbar miteinander verbunden sind;
vorzugsweise wobei ein Ende des ersten Verbindungselements (3) ein erster flacher Abschnitt ist, der erste flache Abschnitt ein erstes Durchgangsloch aufweist, der flexible Leiter (4) ein zweites Durchgangsloch aufweist und das erste Durchgangsloch und das zweite Durchgangsloch durch eine Schraube oder einen Niet verbunden sind;
insbesondere vorzugsweise wobei die Anzahl der ersten flachen Abschnitte zwei beträgt, die beiden ersten flachen Abschnitte parallel zueinander liegen und beide ein erstes Durchgangsloch aufweisen, und das zweite Durchgangsloch zwischen den beiden ersten Durchgangslöchern liegt.

8. Verbinder nach Anspruch 1, bei dem der flexible Leiter (4) und das zweite Verbindungselement (6) durch Klemmen, Verschrauben oder Nieten lösbar miteinander verbunden sind;
vorzugsweise wobei ein Ende des zweiten Verbindungselements (6) ein zweiter flacher Abschnitt ist, der zweite flache Abschnitt ein drittes Durchgangsloch aufweist, der flexible Leiter (4) ein viertes Durchgangsloch aufweist und das dritte Durchgangsloch und das vierte Durchgangsloch durch eine Schraube oder einen Niet verbunden sind;
insbesondere vorzugsweise die Anzahl der zweiten flachen Abschnitte zwei beträgt, die beiden zweiten flachen Abschnitte parallel zueinander angeordnet sind und beide ein drittes Durchgangsloch aufweisen, und das vierte Durchgangsloch zwischen den beiden dritten Durchgangslöchern liegt.

9. Verbinder nach Anspruch 1, bei dem das Material der Steckklemme (2) Kupfer enthält.

10. Verbinder nach Anspruch 1, bei dem das Material des Übertragungsleiters (5) und/oder des flexiblen Leiters (4) Aluminium enthält.

11. Verbinder nach Anspruch 1, bei dem der Verbinderkörper (1) ein Ladebuchsenkörper ist.

## Revendications

1. Connecteur adapté à une pistolet de recharge de véhicule, le connecteur comportant une structure de connexion flexible et comprenant un corps de connecteur (1), un conducteur flexible (4) et un conducteur de transmission (5), le corps de connecteur (1) étant muni à l'intérieur d'une borne enfichable (2), une extrémité de la borne enfichable (2) étant munie d'un premier élément de connexion (3), et une extrémité du conducteur de transmission (5) étant munie d'un deuxième élément de connexion (6);
une extrémité du conducteur flexible (4) est reliée électriquement au premier élément de connexion (3) et l'autre extrémité du conducteur flexible (4) est reliée électriquement au deuxième élément de connexion (6);
**caractérisé en ce que**
le conducteur flexible (4) est un conducteur spiralé (42) élastique, de type ressort, qui définit une cavité longitudinale sur sa face interne.

2. Connecteur selon la revendication 1, dans lequel, lorsque le deuxième élément de connexion (6) oscille, le conducteur flexible (4) se déforme pour amortir l'oscillation du deuxième élément de connexion (6),

3. Connecteur selon la revendication 2, dans lequel le conducteur flexible (4) commence à une extrémité reliée au deuxième élément de connexion (6) et une section représentant au moins 2 % de la longueur du conducteur flexible (4) est décalée radialement le long de la direction longitudinale du conducteur flexible (4).

4. Connecteur selon la revendication 2, dans lequel le conducteur flexible (4) commence à une extrémité reliée au premier élément de connexion (3) et une section représentant au moins 1 % de la longueur du conducteur flexible (4) n'est pas décalée radialement le long de la direction longitudinale du conducteur flexible (4).

5. Connecteur selon la revendication 1, dans lequel la borne enfichable (2) et le premier élément de connexion (3) forment une structure intégrée; ou
la borne enfichable (2) et le premier élément de connexion (3) sont des structures distinctes et la borne enfichable (2) et le premier élément de connexion (3) sont solidement reliés l'un à l'autre par soudage ou sertissage; ou
la borne enfichable (2) et le premier élément de connexion (3) sont des structures distinctes et la borne enfichable (2) et le premier élément de connexion (3) sont reliés de manière amovible par serrage, vissage ou rivetage; ou
le conducteur de transmission (5) et le deuxième élément de connexion (6) forment une structure intégrée; ou
le conducteur de transmission (5) et le deuxième élément de connexion (6) sont solidement reliés l'un à l'autre par soudage ou sertissage; ou
le conducteur de transmission (5) et le deuxième élément de connexion (6) sont reliés de manière amovible par serrage, vissage ou rivetage; ou
le conducteur flexible (4) est formé par enroulement ou toronnage de fils multiconducteurs; ou
le conducteur flexible (4) présente une surface de section transversale différente de celle du premier élément de connexion (3) ou du deuxième élément de connexion (6); ou
le conducteur flexible (4) présente une forme de section transversale différente de celle du premier élément de connexion (3) ou du deuxième élément de connexion (6); ou
le conducteur flexible (4) est relié au premier élément de connexion (3) par soudage ou sertissage.

6. Connecteur selon la revendication 5, dans lequel le conducteur flexible (4) présente une section torsadée et l'angle entre deux plans adjacents reliés par la section torsadée est compris entre 0° et 90°.

7. Connecteur selon la revendication 1, dans lequel le conducteur flexible (4) et le premier élément de connexion (3) sont reliés entre eux de manière amovible par serrage, vissage ou rivetage;
de préférence, une extrémité du premier élément de connexion (3) étant une première partie plate, la première partie plate comportant un premier trou traversant, le conducteur flexible (4) comportant un deuxième trou traversant, et le premier trou traversant et le deuxième trou traversant étant reliés par une vis ou un rivet;
de préférence en particulier, le nombre de premières parties plates étant de deux, les deux premières parties plates étant parallèles l'une à l'autre et comportant chacune un premier trou traversant, et le deuxième trou traversant étant situé entre les deux premiers trous traversants.

8. Connecteur selon la revendication 1, dans lequel le conducteur flexible (4) et le deuxième élément de connexion (6) sont reliés entre eux de manière amovible par serrage, vissage ou rivetage;
de préférence, une extrémité du deuxième élément de connexion (6) étant une deuxième partie plate, la deuxième partie plate comportant un troisième trou traversant, le conducteur flexible (4) comportant un quatrième trou traversant, et le troisième trou traversant et le quatrième trou traversant étant reliés par une vis ou un rivet;
de préférence en particulier, le nombre de deuxièmes parties plates est de deux, les deux deuxièmes parties plates sont disposées parallèlement l'une à l'autre et comportent toutes deux un troisième trou traversant, et le quatrième trou traversant est situé entre les deux troisièmes trous traversants.

9. Connecteur selon la revendication 1, dans lequel le matériau de la borne enfichable (2) contient du cuivre.

10. Connecteur selon la revendication 1, dans lequel le matériau du conducteur de transmission (5) et/ou du conducteur flexible (4) contient de l'aluminium.

11. Connecteur selon la revendication 1, dans lequel le corps de connecteur (1) est un corps de douille de charge (1).
